# EUROPEAN PATENT APPLICATION

(11) **EP 4 113 982 A1**
(43) Date of publication of application: **04.01.2023**
(21) Application number: 21182813.2
(22) Date of filing: 30.06.2021
(51) Int. Cl.: H04N 7/14, G06F 3/01, G06K 9/00, H04N 7/15

(54) **METHOD FOR SENSING AND COMMUNICATING VISUAL FOCUS OF ATTENTION IN A VIDEO CONFERENCE**

(71) Applicant: Eyeware Tech SA, 1920 Martigny (CH)
(72) Inventor: Funes Mora, Kenneth Alberto, 1018 Lausanne (CH); Nguyen, Laurent, 1800 Vevey (CH)
(74) Representative: P&TS SA (AG, Ltd.)

(57) **Abstract**

The invention relates to a method for sensing and communicating visual focus of attention in a video conference between at least a first and a second video conferee (P1, P2, P3) located in respectively a first and a second location. The method is using a video conference system comprising a user interface (U) displaying the video conferees (P1, P2, P3) on a screen (13) in each of said first and second locations. The method comprises: i) retrieving the point of regard (g) of the first video conferee (P1) located in the first location, in relation to the user interface (U) displayed on the screen (13) to said first video conferee (P1) in said first location, by means of an eye tracking device (16), and ii) determining the likelihood that the first video conferee (P1) is looking at each of one or more video conferees (P2, P3) as a function of said point of regard (g) and the spatial regions of said one or more video conferees (P2, P3) as rendered in said user interface (U) in said first location. Communicating the visual focus of attention of the first video conferee (P1) in said first location, comprises: generating and displaying a visual cue (40a; 40b; 40c; 40d) in said user interface (U) displayed in said second location to the second video conferee (P2), indicating the likelihood that the first video conferee (P1) in said first location is looking at the second video conferee (P2), and/or a third video conferee (P3) in the same second location or in a third location.

## Description

### Field of the invention

The present invention concerns a method for sensing and communicating visual focus of attention in a video conference.

### Description of related art

Eye tracking and gaze tracking allows the understanding of human attention, which is beneficial for applications including but not limited to driver-monitoring systems, advertising, retail, and behavioural research.

In the context of human-human communication, gaze is an important cue as it is used for instance to regulate the flow of communication, provide feedback, or reflect cognitive activity. In general, humans perceive others' gaze signals effortlessly and these cues improve the flow of natural interactions.

In video conferencing systems, a significant amount of gaze information is lost, making it difficult to understand and interpret others' gaze signals. Specifically, the two main challenges are: first, video conferees tend to look at their screen rather than at the camera, yielding an impression of gaze avoidance. Second, it is significantly challenging for video conferees to infer where another conferee is looking; in other words, the information about who is looking at whom is lost. These challenges negatively affect the quality and the fluidity of interactions in video conferencing systems.

To address the challenge of perceived gaze avoidance in video conferencing systems, gaze redirection systems have been developed in which the appearance of the eyes is artificially modified to give the impression of eye contact among conferees. Although valuable, these systems do not solve the attention problem in group interactions as every participant will instead get the impression that every other video conferee is looking at them.

The recent work of Greer and Dubnov ["Restoring Eye Contact to the Virtual Classroom with Machine Learning", Proceedings of the 13th International Conference on Computer Supported Education (2021)] addressed the problem of understanding and conveying visual focus of attention information in a video conferencing setup. Their system uses an end-to-end neural-network-based method to infer the point-of-regard on the screen, in conjunction with a detection step which locates the position of each conferee on the screen to finally make a decision on which video conferee is being looked at by the user. The user's video feed is then augmented with text overlay to communicate the person that is being looked at.

While this information is valuable, this work has not addressed the question of how to communicate gaze information in a useful, meaningful, unobtrusive, easy-to-understand, and intuitive way, such that this tool can improve the quality and fluidity of interactions in video conferencing systems. Moreover, this work was limited to one "speaker", whose gaze was tracked and streamed to "listeners"; therefore it hasn't addressed the case for which multiple conferees stream their gaze attention, and its effect on the quality of the interaction. Moreover, a direct extension of their work which would add to each participant the label of the person being looked at, would easily generate an information overload of names of people that can become distracting to the overall experience and conversation.

### Brief summary of the invention

An aim of the present invention is therefore to provide a method for sensing and communicating visual focus of attention in a video conference, wherein the means of communications are useful, meaningful, unobtrusive, and intuitive.

According to the invention, this aim is achieved by means of a method for sensing and communicating visual focus of attention in a video conference between at least a first and a second video conferee located in respectively a first and a second location. The method uses a video conference system comprising a user interface displaying the video conferees on a screen in each of said first and second locations. The method comprises:
retrieving the point of regard of the first video conferee located in the first location, in relation to the user interface displayed on the screen to said first video conferee in said first location, by means of an eye tracking device, and
determining the likelihood that the first video conferee is looking at each of one or more video conferees as a function of said point of regard and the spatial regions of said one or more video conferees as rendered in said user interface in said first location.

Communicating the visual focus of attention of the first video conferee in said first location, further comprises generating and displaying a visual cue in said user interface displayed on the screen to the second video conferee in said second location, indicating the likelihood that the first video conferee in said first location is looking at the second video conferee in said second location, and/or generating and displaying a visual cue/additional visual cue either
on said user interface displayed on said screen in said second location to a third video conferee in the same second location indicating the likelihood that the first video conferee in said first location is looking at the third video conferee in said second location, or
on another user interface displayed in another screen in a third location to a third video conferee indicating the likelihood that the first video conferee in said first location is looking at the third video conferee in said third location.

In an embodiment, communicating in said second location the likelihood that the first video conferee in said first location is looking at the second video conferee of said second location, comprises the steps of:
displaying a visual cue in said user interface in said second location, in proximity to where the first video conferee in said first location is displayed, and
modifying the visual characteristics of said visual cue as a function of the likelihood that the first video conferee in said first location is looking at the second video conferee of said second location.

In an embodiment, the step of modifying the visual characteristics of said visual cue, includes modifying one or multiple visual properties as a function of said likelihood, among the following properties: transparency; colour; shape; location; animation; icon replacement.

In an embodiment, communicating in said second location the likelihood that the first video conferee in said first location is looking at the third video conferee in said third location, comprises the steps of:
displaying a visual cue in said user interface in said second location, in proximity to where the first video conferee in said first location is displayed,
computing the relative spatial position of the third video conferee in said third location as displayed in the user interface in said second location, in relation to the position of the first video conferee in said first location as displayed in said user interface in said second location,
modifying the visual properties of said visual cue as a function of both the likelihood that the first video conferee in said first location is looking at the third video conferee in said third location, and the relative spatial position of said third video conferee in said third location in relation to the first video conferee in said first location as displayed in said user interface in said second location.

In an embodiment, the step of modifying the visual characteristics of said visual cue, includes modifying one or multiple visual properties as a function of said likelihood and said relative spatial position, among the following properties: orientation; shape; transparency; colour; location; animation variation; icon variation.

In an embodiment, temporal filtering is applied when computing the variations of one or multiple visual properties of said visual cues.

In an embodiment, the step of modifying the visual characteristics of said visual cue, further comprises the steps of:
retrieving the point of regard of the second video conferee located in said second location, in relation to the user interface displayed to said second video conferee in said second location, by means of an eye tracking device, and
computing the variations of one or multiple visual properties of said visual cues as also a function of the distance of said point of regard to each of the respective visual cues.

In an embodiment, the step of modifying the visual characteristics of the visual cue corresponding to the visual focus of attention of video conferee in a first location, as displayed on the user interface in a second location, as a function of the point of regard of video conferee in said second location, has a different effect according to the likelihood that said video conferee in a first location is looking at video conferee in said second location, in comparison to the likelihood that video conferee in a first location is looking at the third video conferee in a third location.

In an embodiment, the location and number of visual cues displayed in said user interface in said second location, onto a layout region associated to one or many conferees in a first location, is a function of the number of conferees in said first location.

In an embodiment, computing the location of said visual cue further comprises the steps of:
using a system to recognize the image position of the first video conferee in said first location, on the video transmitted from said first location to said second location, and,
computing the location of a visual cue associated to the first video conferee as a function of the image position of said first video conferee in said video.

In an embodiment, the step of modifying the visual characteristics of said visual cue, further comprises the steps of:
retrieving the point of regard of the second video conferee located in said second location, in relation to the user interface displayed to said second video conferee in said second location, by means of an eye tracking device, and
computing the variations of one or multiple visual properties of said visual cue as also a function of the likelihood that the second video conferee in said second location is looking at the first video conferee of said first location, as rendered in said user interface in said second location.

In an embodiment, the step of modifying the visual characteristics of said visual cues, further comprises the steps of:
retrieving the point of regard of the third video conferee located in said third location, in relation to the user interface displayed to said third video conferee in said third location, by means of an eye tracking device, and
computing the variations of one or multiple visual properties of said visual cues as also a function of the likelihood that the third video conferee in said third location is looking at the first video conferee in said first location, as rendered in said user interface in said second location.

In an embodiment, the step of modifying the visual characteristics of said visual cue associated to the first video conferee when looking at the third video conferee, is also dependent on the likelihood that said third video conferee is looking at the first video conferee.

In an embodiment, the step of modifying the visual characteristics of said visual cue includes modifying the appearance of the first video conferee in the user interface in the second location. The appearance is modified based on at least one or a combination of at least two of the following appearance modifications: eyes direction; head pose; body pose.

Another aspect of the invention relates to a tangible computer product containing program code for causing a processor to execute the method as described above when said code is executed on said processor.

### Brief Description of the Drawings

The invention will be better understood with the aid of the description of an embodiment given by way of example and illustrated by the figures, in which:
- Figure 1 schematically represents a computing device, an eye tracking device and a video conference system software with a user located in a first location according to a first embodiment;
- Figure 2 schematically represents a computing device, with in-built eye tracking functionality and executing a video conference system software with a user located in a first location according to a second embodiment;
- Figure 3 schematically represents the video conference system user interface, of any of the first and second embodiments, as seen by a second user in a second location, and conveying the scenario in which a first user in a first location is looking at the second user;
- Figure 4 schematically represents the video conference system user interface of Figure 3 as seen by a second user in a second location, and conveying a first scenario in which a first user in a first location is looking at the second user and a second scenario in which the first user is not looking at second user;
- Figure 5 shows diverse mappings to compute the visual properties of a visual icon as a function of an attention likelihood, according to some embodiments;
- Figure 6 schematically shows diverse ways to convey received attention by a user of the system, according to different embodiments;
- Figure 7 schematically represents visual cues in a scenario in which attention from one video conferee is conveyed towards another video conferee, which is different from the video conferee observing the user interface;
- Figure 8 schematically shows diverse ways to convey attention from one video conferee towards one another video conferee, which is different from the video conferee observing the user interface, according to different scenarios;
- Figure 9 schematically depicts a video conferee which is interacting with the user interface of the video conference system, also using an eye-tracking device according to an embodiment;
- Figure 10 schematically shows a mechanism to highlight mutual gaze events in addition to received gaze, according to an embodiment;
- Figure 11 schematically depicts a system which displays attention visual cues to each of multiple video conferees joining from the same location, according to an embodiment;
- Figure 12 schematically shows a mechanism to highlight mutual gaze events between two other video conferees than the one interacting with the user interface, according to an embodiment;
- Figure 13 schematically shows a mechanism to modify the visual cues for every other video conferee according to the gaze of the video conferee of interest, and the position of said every other video conferee in the user interface seen by the video conferee of interest, according to an embodiment, and
- Fig. 14 shows a schematic and a flowchart describing the step of determining the visual properties of a visual cue as a function of attention likelihood, according to an embodiment of the invention.

### Detailed Description of different embodiments of the Invention

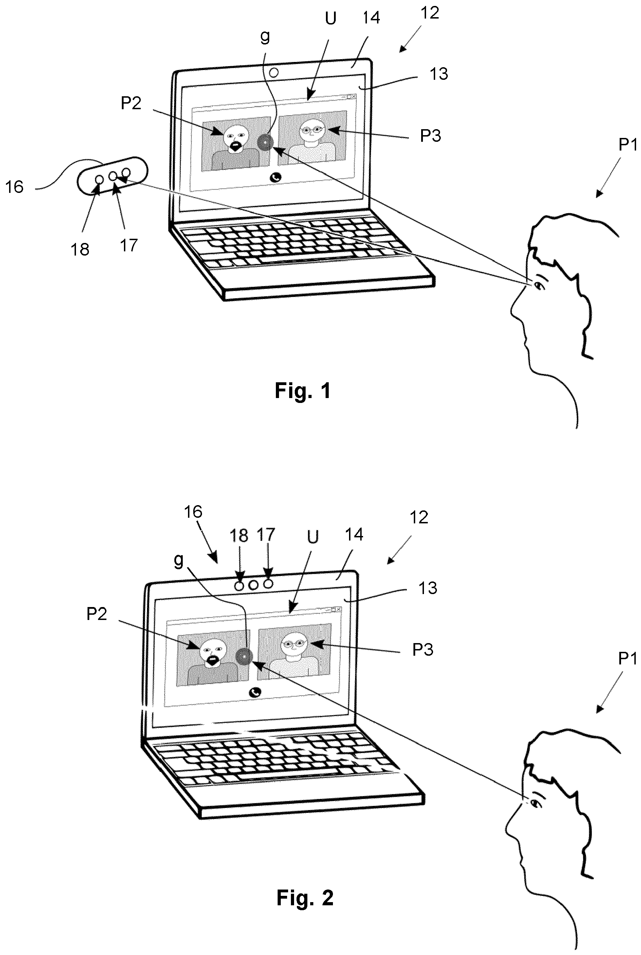

Figure 1 schematically shows an embodiment comprising a laptop computer as computing device 12, which has an eye tracking device 16 connected to it, while executing a video conference software, visible as a user interface U. The system is being used by a first video conferee P1 located in a first location, which is engaged in a video conference with a second video conferee P2 in a second location and a third video conferee P3 in a third location. Both the second and third video conferees P2 and P3 have their webcams and video feed streaming, which is later displayed on the user interface U, visible to the first video conferee P1. Using the eye tracking device 16 makes it is possible to retrieve in real time the gaze g, or point-of-regard on the screen of the first video conferee P1. Given the location of both the second and third video conferees P2 and P3 within the user interface U, it is then possible to determine how likely is the first video conferee P1 to be looking at the second or third video conferee P2, P3, by considering the spatial layout to the user interface U and the distance of the gaze g of the first video conferee P1 to each location of the second or third video conferees P2, P3 within the user interface.

The gaze estimate g of the first video conferee P1 is retrieved by the eye-tracking device 16. The gaze estimate g of the first video conferee may be obtained by different methods. For example, the gaze of the user may be acquired by retrieving an input image and a reference image of an eye of the user and processing the input image and the reference image to estimate a gaze difference between the gaze of the eye within the input image and the gaze of the eye within the reference image. The gaze of the user is retrieved using the estimated gaze difference and the known gaze of the reference image. This procedure is disclosed in detail in WO2020/044180, the content of which is hereby incorporated by reference.

In another example, the gaze of the user may be acquired by comparing an image geometric model with at least one image segmentation map generated from one input image observation corresponding to an image of the user's eye and iteratively modifying at least one parameter in the set of geometric parameters of the image geometric model to generate a new image geometric model of a user's eye until a model correspondence value reaches the optimal value. This procedure is disclosed in detail in WO2020/208494, the content of which is hereby incorporated by reference. Other methods for gaze estimation are disclosed in detail for example in WO2014/146199 and WO2015/192879.

Other methods, such as those based on pupil-centre-corneal-reflection (PCCR) may also be suitable to retrieve the gaze estimate g, which can either deliver the gaze as directly a 2d point on the screen coordinates or a 3D line-of-sight, depending on whether geometric models are used or other corneal reflections mapping techniques are applied. In yet other methods, the gaze estimate g can be retrieved from an end-to-end deep neural network that is capable at predicting the point-of-regard from minimal information, such as direct image of the face and/or images of the eyes, as it was done by Krafka et al. "Eye tracking for Everyone" published in 2016 IEEE Conference on Computer vision and Pattern Recognition.

Independently from the specific method used to retrieve the gaze estimate g, a system could also benefit from explicit calibration procedures in which a user is asked to look at a set of points on the screen, for the eye tracking algorithm to compute user-specific parameters which configure the eye-tracking device to deliver more accurate estimates of the gaze.

In a non-illustrated embodiment, the tracking device is a dedicated eye-tracking device with in-built eye tracking algorithms running in a processing unit or in an ASIC. In another non-illustrated embodiment, the eye-tracking device is a mobile device such as a smartphone or a tablet. In yet another embodiment, depicted in Figure 2, the eye-tracking device 16 is in-built within the computing device 12. In a preferred embodiment, the eye-tracking device 16 comprises an RGB camera 17 as well as a depth-sensing camera 18 such as the TrueDepth^{®} camera module of an IPhone^{®}.

In another embodiment, the device comprises one or multiple infrared cameras as an alternative or complementary to the RGB camera. Such infrared data may also be the amplitude data from time-of-flight sensors. In another non-illustrated embodiment, the mobile device may comprise dual or multiple cameras, without any depth-sensing camera, that can together work as a depth sensor through stereo triangulation. Cameras of one or different types could indeed be mixed. The resolution, type and focal of different cameras may vary. In an embodiment, the 3d pose of the eye tracking device with respect to the screen of the computing device, may be required in order to infer an estimated line of sight gaze vector, into a screen point-of-regard gaze estimate g.

In an embodiment, the tracking device, is a head mounted eye tracker which is used to capture the gaze on a screen of an external computing device or, in the case of virtual or augmented reality systems, said screen being virtual and comprising also a user interface.

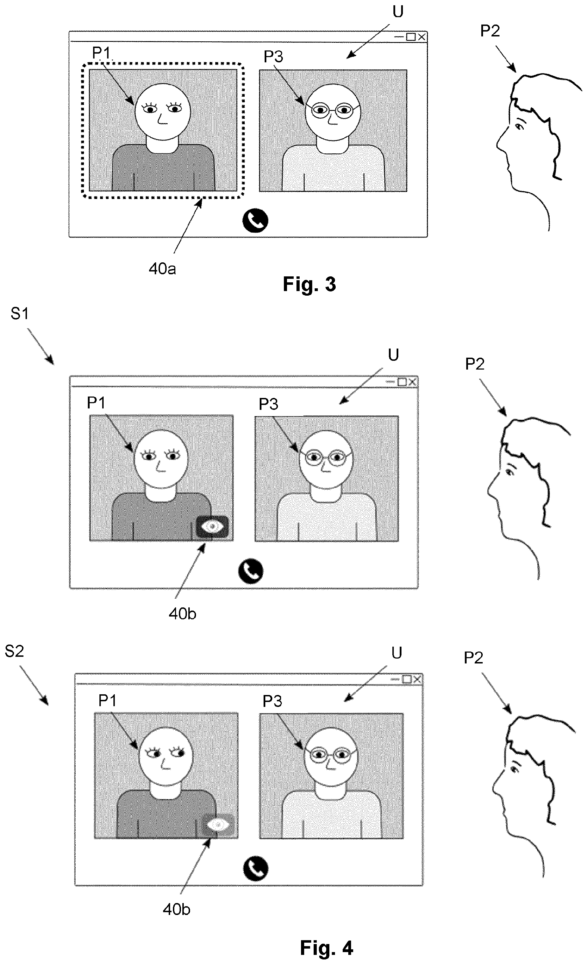

In an embodiment, as shown in Figure 3, the user interface U is displayed to the second video conferee P2 in a second location which conveys whether the first video conferee P1 is looking at the second video conferee P2 or not. The scenario, as depicted in the embodiment examples of Figure 1 or 2, is assumed to be running in a first location. In such a scenario the gaze g of the first video conferee P1 is retrieved and its position on the screen is compared to the location or region in the user interface U where the second video conferee P2 in the second location is rendered, to determine the likelihood that the first video conferee P1 is looking at the second video conferee P2. In an embodiment, a threshold is used on said likelihood to establish whether the first video conferee P1 is indeed looking at the second video conferee P2. This information is then conveyed to the second video conferee P2 in the second location by means of a visual cue being a highlighted bounding box 40a which indicates that the first video conferee P1 is looking at the second video conferee P2 at the given time-instant. In the example of Figure 3, the system does not show the visual cue for a third video conferee P3 in a third location because, either third video conferee P3 is not using an eye tracking device or, the third video conferee P3 has an eye tracking device with which it was determined that the third video conferee P3 is not likely to be looking at the second video conferee P2.

In an embodiment, determining whether a first video conferee P1 is looking at a second video conferee P2, displayed in the user interface U observed by the first video conferee P1, is a binary process which computes the Euclidean distance from the gaze estimate g to the region where the second video conferee P2 is rendered. In a preferred embodiment, the distance is mapped into a probability or a score. For example, by means of establishing a gaussian surrounding the region where the second video conferee P2 is rendered, by using a sigmoid function, inverse linear transform, or similar mappings in which zero to small distance leads to a high likelihood, and large distances decay softly to a zero score. An advantage of modelling the attention of a conferee as a continuous signal (a likelihood), rather than binary, is that the system could then convey attention to multiple conferees at once, as well as to account for noise from the eye tracking algorithm. For example, in Figure 1, the first conferee P1 in the first location is looking in between the locations of the second and third video conferees P2 and P3 in second and third locations.

In an embodiment, the location of a video conferee within the user interface is modelled as a single point in screen or user interface pixel coordinates. In a preferred embodiment, the location of a video conferee is represented by a region, either a rectangle or an irregular shape defined by contour that may follow the shape of the upper body, face, eyes, or full body. In an embodiment, said rectangle can be retrieved by screen capturing and recognizing the areas of each user using image processing, or by using an API from the video conference software.

In an embodiment, schematically shown in Figure 4, two scenarios S1 and S2 are represented. In the scenario S1, the system has determined that it is likely that the first video conferee P1 in the first location is looking at the second video conferee P2 in the second location. The user interface U is depicted as seen by the second video conferee P2 in the second location. The system therefore conveys the attention information by displaying a visual cue 40b, an eye icon, fully opaque so it is strongly visible to the second video conferee P2. In the scenario S2, the system has instead determined that the first video conferee P1 in the first location is unlikely to be looking at the second video conferee P2 in the second location. The system therefore conveys this information to the second video conferee P2 by modifying visual characteristics of the visual cue 40b as a function of said likelihood. In such a scenario, the visual property of transparency is used, and thus the icon is shown almost fully transparent, to convey that it is unlikely that the first video conferee P1 is looking at the second video conferee P2. In other words, the transparency of the visual cue 40b is directly a function of the attention likelihood.

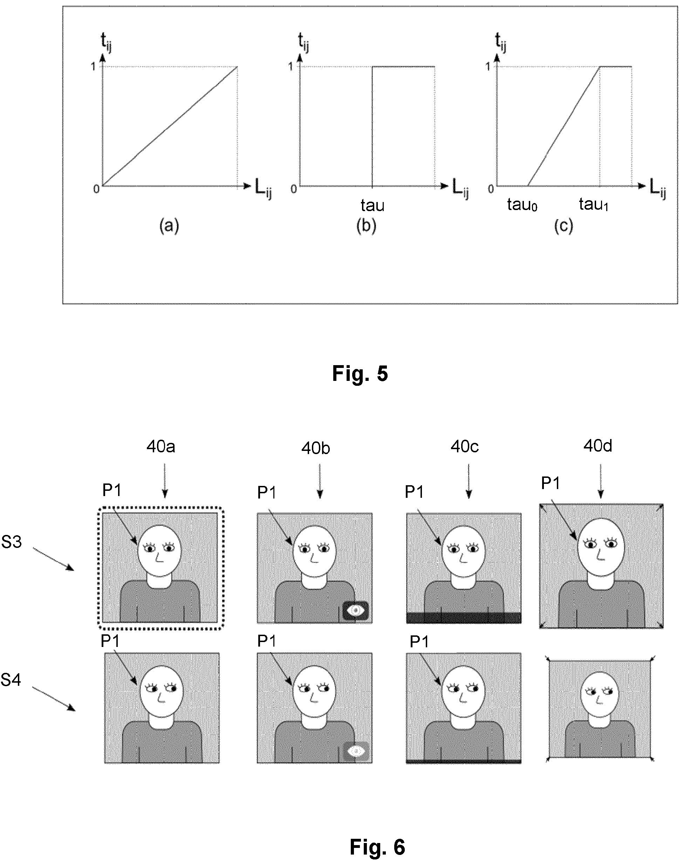

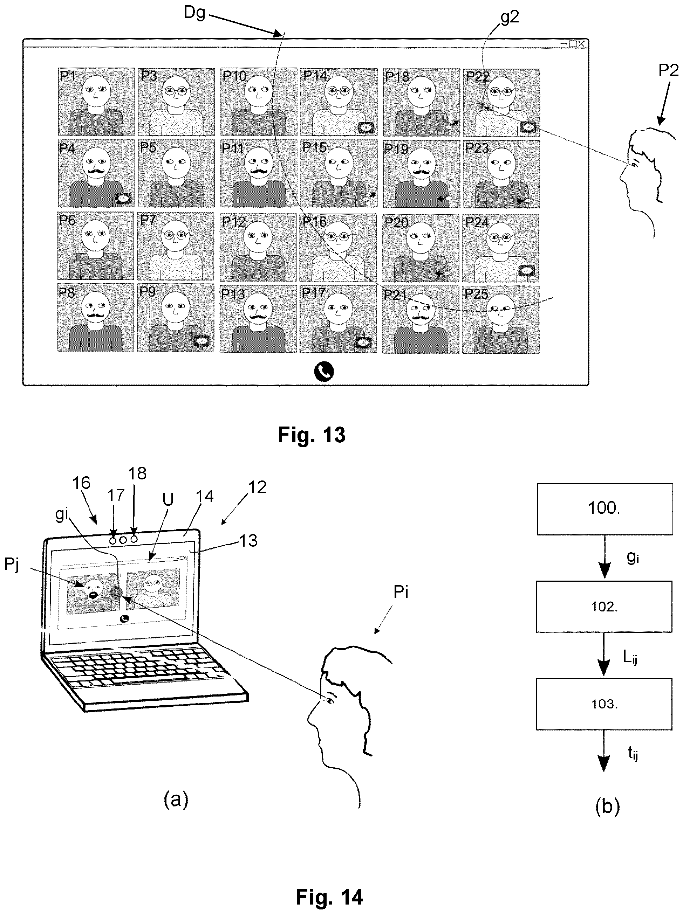

Fig. 14 (a) schematically shows a setup, according to an embodiment, to retrieve the gaze gi of video conferee Pi, in relation to position where video conferee Pj is displayed on the user interface U. Fig. 14 (b) shows a flowchart to determine the value of a visual property, such as transparency, of the visual icon 40b, by processing the available attention likelihood signal. The step 100 extracts the gaze gi of video conferee Pi, the step 102 extracts the likelihood of attention Lj, conveying whether video conferee Pi is looking at video conferee Pj. The step 103 is then the step of computing the transparency tᵢⱼ of the visual cue as a direct function of the likelihood, with different mapping functions being shown in Figure 5.

In an embodiment, as shown in Fig. 5 (a), a system may map the likelihood of regard to a visual property such as transparency level as a linear function.

In another embodiment, as shown in Fig. 5 (b), a system may map the likelihood of regard to a visual property such as the transparency level as a step function using a threshold tau, with all likelihoods below the threshold yielding a fully transparent icon, and all likelihoods above the threshold yielding a fully solid icon.

In another embodiment, as shown in Fig. 5 (c), a system may map the likelihood of regard to a visual property such as the transparency level as a part-wise linear function using two thresholds tau₀ and tau₁, for which the relationship between the thresholds is linear, and all likelihoods below tau₀ yield a fully transparent icon, and all likelihoods above tau₁ yield a fully solid icon.

Figure 6 shows different variants of visual cues 40a, 40b, 40c, 40d as well as their visual properties being modified as a function of the attention likelihood that the first video conferee P1 in said first location is looking at the second video conferee P2 in said second location, according to different embodiments of the invention. In this figure, S3 is the scenario in which the first video conferee P1 is likely looking at the second video conferee P2, whereas S4 is the scenario in which the first video conferee P1 is unlikely to be looking at the second video conferee P2. These are therefore the scenarios conveying whether the conferee of interest is receiving attention.

As shown in Figure 6, multiple embodiments may then implement different visual cues with modifiable visual properties that convey or not ongoing attention towards a video conferee. Amongst the possibilities are a bounding box or a highlight surrounding a video conferee region on the user interface 40a, an icon whose transparency is variable 40b, a bar which appears and takes more area accordingly 40c, or animations such as change of the scale of the area of video conferee 40d. These are just some examples among others, as it would be off-scope to discuss all possible permutations on visual cue variants and their modifiable visual properties such as colour, shape, location, animation or icon replacement.

In a preferred embodiment, the system is able to convey to the video conferee of interest, the attention between the other video conferees. This is a valuable feature as it enriches the communication of social signals in the video conference, enabling behaviours such as gaze following, and overall facilitates the conversational dynamics, making it an experience which is closer to face-to-face multi-party conversations. To enable signalling the likelihood that a first video conferee P1 in a first location is looking at a third video conferee P3 in a third location, an additional or different visual cue can then be displayed at the position where the first video conferee P1 in the first location is displayed on the user interface as observed by the second video conferee P2 in the second location. Moreover, the visual characteristics of said visual cue can be modified according to the likelihood value.

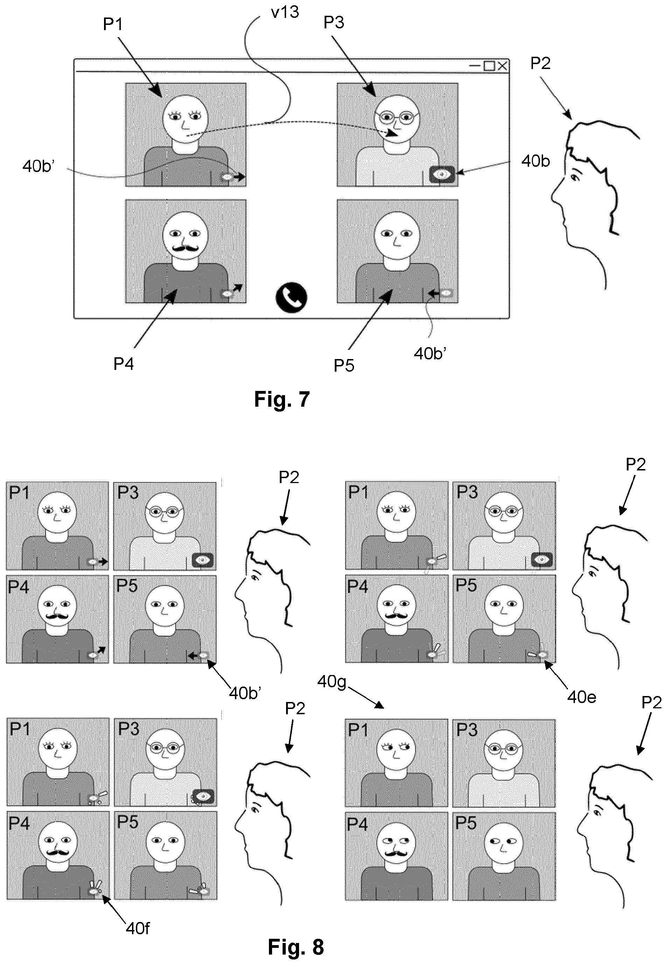

In an embodiment, schematically depicted in Figure 7, conveying to the video conferee of interest P2 the attention between the other video conferees P1, P3, assumes that the attention likelihood value, computed in the first location, is transmitted to the second location. Such likelihood is computed by an embodiment as depicted in Figures 1 or 2. In addition, the system determines the position where the third video conferee P3 in the third location is displayed on the user interface in the second location, in relation to the position where the first video conferee P1 in the first location is displayed on the same user interface in the second location. This process establishes a direction vector v13 in pixel coordinates. In an embodiment, the direction vector v13 is computed by taking the difference in pixel coordinates between the centre of the region where the third video conferee P3 is displayed and the centre of the region where the first video conferee P1 is displayed, as depicted in Figure 7.

In an embodiment, schematically depicted in Figure 7, given the attention likelihood that the first video conferee P1 is looking at the third video conferee P3, and the direction vector v13 of the third video conferee P3 in relation to the first video conferee P1 on the user interface seen by the second video conferee P2, a visual cue 40b' can be displayed in proximity to where the first video conferee P1 in the first location is rendering. Moreover, the appearance and orientation of said visual cue is altered as a function of the attention likelihood and the direction vector. Figure 7 shows an embodiment of the invention in which said visual cue 40b' comprises an arrow where the orientation is given by v13 and its length is computed as a function of the attention likelihood. Moreover, Figure 7 depicts the scenario in which the first video conferee P1 and a fourth video conferee P4 are looking at the third video conferee P3, with a fifth video conferee P5 being more likely to be looking at the fourth video conferee P4, whereas the third video conferee P3 is looking at the second video conferee P2, indicated by the opaque and large eye icon 40b.

As shown in Figure 8, multiple embodiments may then implement different visual cues with modifiable visual properties that convey or not the attention from a video conferee P1 towards another video conferee P3, as observed by a video conferee P2. Figure 8 also depicts the scenario in which P4 is most likely to be looking at P3, P5 is most likely to be looking at P4, and P3 is most likely to be looking at P2. Amongst the possibilities are:
an arrow pointing in the direction of the other video conferee which is most likely to be looked at, if other than the conferee of interest 40b',
multiple bars, each pointing in the direction of every other video conferee, with the opacity of each bar to be a function of the likelihood of said other video conferee to be looked at by the given video conferee associated with the visual cue 40e,
multiple bars, each pointing in the direction of every other video conferee, where the length of each bar is a function of the likelihood of said other video conferee to be looked at by the given video conferee associated with the visual cue 40f and,
redirection of the eye gaze of the video conferee towards the position of the other video conferee which is most likely to be looked at 40g.

These are few examples among others, as it would be off-scope to discuss all possible permutations on visual cue variants and their modifiable visual properties such as orientation, colour, shape, location, animation or icon replacement.

In a preferred embodiment, temporal filtering can be beneficial to improve the video conferee experience. Temporal filters, such as median windows, moving average, or other window-based approaches can be applied on signals such as the likelihood for a video conferee to look at another, the direction vector, and/or on the level of the visual property being modified as a function of the previous variables. This can minimize abrupt changes on the displayed user interface which can, otherwise, become distracting for a video conferee.

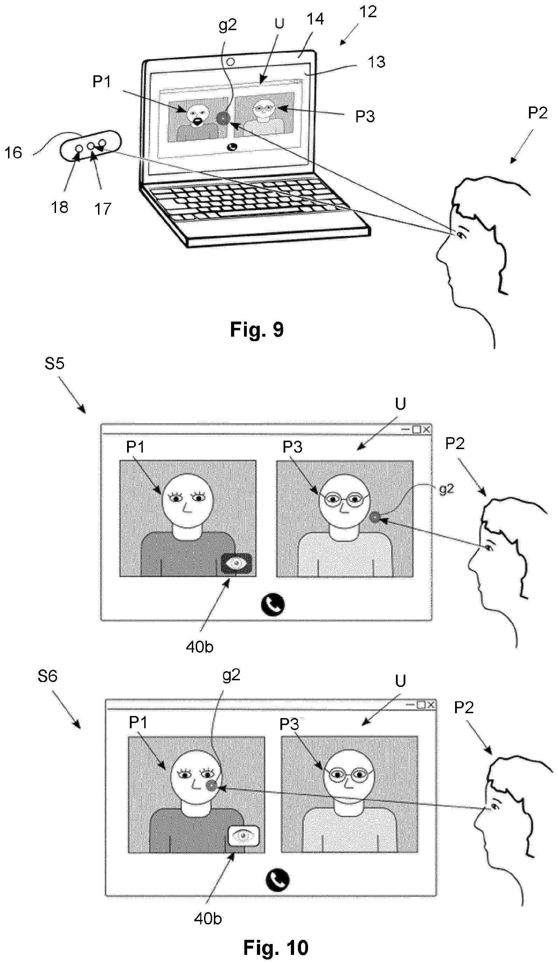

In an embodiment, an eye tracking device is used to retrieve the eye gaze g2 of the second conferee P2 in the second location as well, as depicted in Figure 9. While this can be beneficial as to inform the other video conferees P1, P3 of the attention of video conferee P2, as described previously, it can also enrich and communicate events such as mutual gaze, or minimize visual clutter.

In an embodiment, schematically depicted in Figure 10, the eye gaze g2 of the second video conferee in the second location is used to compute the likelihood that the second video conferee P2 is looking at the first video conferee P1. Then, an additional level of modifications on the visual cue displayed about the first video conferee P1 in the first location can be applied if the likelihood that both the first video conferee P1 is looking at the second video conferee P2 and the second video conferee P2 is looking at the first video conferee P1 is high. In Figure 10, scenarios S5 and S6 both assume that the likelihood that the first video conferee P1 is looking at the second video conferee P2 is high. Thus, if mutual gaze is detected between the first and second video conferees P1, P2, the system may further highlight this event by modifying the visual properties associated with the visual cue of the first video conferee P1 in the first location. This is depicted as, in the case of scenario S5, the likelihood that the second video conferee P2 is looking at the first video conferee P1 is low, and therefore the visual cue 40b appears with a normal colour, whereas in scenario S6, the second video conferee P2 has a high likelihood of looking at the first video conferee P1 and therefore the property of colour of visual cue 40b changes which signals to the second video conferee P2 that there is a stronger attention contact.

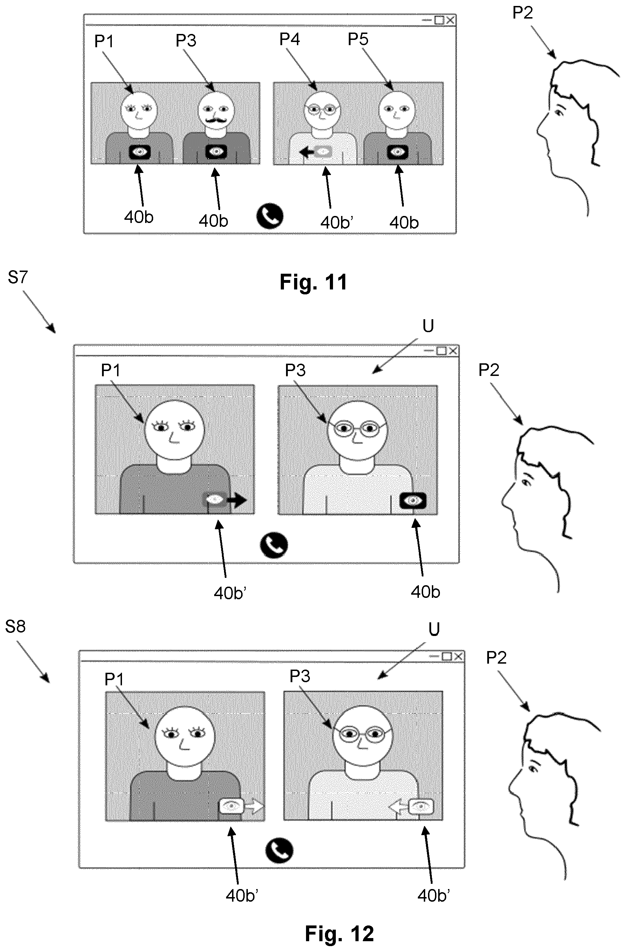

In an embodiment, multiple video conferees may participate from the same location and, therefore, all appearing in the same video stream displayed to the other video conferees in the different locations. In such a scenario, schematically depicted in Figure 11, a visual cue 40b, 40b' may therefore be displayed per detected video conferee in proximity to their respective video stream position, on the user interface as observed by the second video conferee P2 in the second location. In the scenario depicted in Figure 11, all video conferees P1, P2, P5 of the user interface displayed in the second location have a high likelihood to be looking at video conferee P2 except video conferee P4 which is looking at either of video conferees P1 or P3.

In an embodiment, computer vision techniques for face detection, body detection, face recognition, or similar may therefore help to more accurately detect the position of each video conferee within their respective video stream. In an embodiment, knowing the accurate position of a video conferee within their video streams can help to improve the computation of the likelihood that a given video conferee is looking at another video conferee, as, when looking at another video conferee, a person is more likely to look at their eyes rather than the centre of the video stream region. In another embodiment, knowing the accurate position of a video conferee within the user interface, can improve the accuracy of a direction vector computation, and thus reduce ambiguities when depicting attention between pairs of video conferees. In yet another embodiment, detecting the accurate position of a video conferee may refine the location where the visual cue is displayed. For example, in proximity to their bodies or faces.

In an embodiment, the gaze of a video conferee in the first location and the gaze of a video conferee in a third location are retrieved by means of an eye-tracker. Using this information, the likelihood that the video conferee in the first location is looking at the video conferee in the third location can be computed as well as the likelihood that the video conferee in the third location is looking at the video conferee in the first location.

In an embodiment, schematically depicted in Figure 12, the likelihood that the third video conferee P3 in the third location is looking at the first video conferee P1 in the first location is available. Then, an additional level of modifications on the visual cue displayed about video conferee P1 in the first location can be applied if the likelihood that the first video conferee P1 is looking at the third video conferee P3 is high and the likelihood that the third video conferee P3 is looking at the first video conferee P1 is high. In Figure 12, scenarios S7 and S8 both assume that the likelihood that the first video conferee P1 is looking at the third video conference P3 is high. Thus, if mutual gaze is detected between the first and third video conferees P1, P3, the system may further highlight this event by modifying the visual properties associated with the visual cue of the first video conferee P1 in the first location, as well as the visual cue 40b of the third video conferee P3 in the third location. This is depicted as, in the case of scenario S7, the likelihood that the third video conferee P3 is looking at the first video conferee P1 is low, and therefore the visual cue 40b appears with a normal colour, whereas in scenario S8, the third video conferee P3 has a high likelihood of looking at the first video conferee P1 and therefore the property of colour of visual cue 40b' changes which signals to the second video conferee P2 in the second location that there is a stronger attention contact (mutual gaze) between the first and third video conferees P1, P3.

In an embodiment, schematically depicted in Figure 13, the visual cues' visual properties of every other video conferee as displayed in the user interface in the second location, and observed by the second video conferee P2, may be further dependent on the retrieved eye gaze g2 of the second video conferee P2 and, specially, the distance Dg between the eye gaze g2 of the second video conferee P2 and the location where every other video conferee P1, P3-P25 as displayed on the user interface observed in the second location. In a preferred embodiment, visual cues related to other video conferees which are not likely to be looking at the second video conferee P2, and the gaze g2 is at a large distance, are not displayed in the user interface to convey who else they are looking at. In Figure 13 that is the example of video conferees P1, P12, P8, for example. This has an added benefit on user experience, as the attention dynamics of the video conferees can otherwise be distracting for the second video conferee P2. Nevertheless, in a preferred embodiment, it can be beneficial to maintain signalling attention from every other video conferee if they are likely to be looked at by the second video conferee P2, as observed in the user interface in the second location, as humans are more sensitive to detecting whether other humans are paying attention to them even with the peripheral view. Therefore, such an approach can elicit an equivalent social signal. In Figure 13, this is the case for video conferees P4, P9, and P17. Moreover, in the example embodiment depicted in Figure 13, the visual cues of all video conferees whose position is close to the gaze g2 of video conferee P2, are displayed fully.

In an embodiment, retrieving the position of video conferees within the user interface uses an API of the video conferencing software to retrieve the spatial layout and/or the video streams of every video conferee.

In an embodiment, a communication protocol, either through a local network or through the internet, in the form of TCP sockets, web APIs, web hooks, etc. can be used to communicate the attention likelihood between the different locations of the video conference system.

In an embodiment, the transmission of video conference data makes use of techniques for face video encoding and decoding through a combination of keyframes, face tracking, landmarks tracking, or low dimensionality representations of faces or bodies and their movements, preferably through deep neural networks and, in particular, "Generative Adversarial Networks" (GANs). An example is deep fake like technologies, or the readily available NVIDIA Maxine^{™} platform.

In an embodiment, the redirection of the attention of a video conferee towards the position of the other video conferee which is most likely to be looked at 40g, within a user interface, takes advantage of said facial video compression techniques, as the receiving end can then modulate the eye direction, head pose or even body pose accordingly as to generate the correct attention direction. This process is therefore an artificial modification of the video conferee appearance. It's important therefore to provide good keyframes and reconstruction techniques, as well as carefully modifying the eye direction, head pose, and/or body pose so it is pleasantly and naturally perceived by video conferee P2 of the second location.

To manage transitions between gaze targets in a pleasant and natural way when generating artificial modifications of video conferees appearances, it would be beneficial for such an embodiment to integrate temporal filtering techniques, such as window-based approaches including moving median or average filters or machine-learning-based approaches like hidden Markov models and long short-term memory models.

In an embodiment, the generation of artificial video conferee appearances in a natural and pleasant manner, may benefit from prior statistical models on human movements and behaviour to ensure that transitioning of synthetic attention between targets is not a simple interpolation that may be perceived unnatural for video conferee of the second location P2. Such models therefore are able to synthesize trajectories of head, body or eyes that elicit natural human movements in conversational settings.

In an embodiment, said artificial appearance modification of a video conferee P1 in the user interface on the receiving end is applied to the head pose to generate the correct attention direction, so it is pleasantly and naturally perceived by video conferee of the second location P2.

In an embodiment, said artificial appearance modification of a video conferee P1 in the user interface on the receiving end is applied to the body pose to generate the correct attention direction, so it is pleasantly and naturally perceived by video conferee of the second location P2.

In an embodiment, said artificial appearance modification of a video conferee P1 in the user interface on the receiving end is applied to a combination of eyes, head pose, and body pose to generate the correct attention direction, so it is pleasantly and naturally perceived by video conferee of the second location P2.

Various modifications and variations to the described embodiments of the invention will be apparent to those skilled in the art without departing from the scope of the invention as defined in the appended claims. For example, the visual icons may be different than an eye icon, bars or arrows, as well as modifiable through transparencies. The communication protocol, integration architectures or user interfaces may also be different, for example, a spatial layout of video conferees may further comprise other areas than rectangular regions. They could be circular, or even all video conferees joined together into a single composed video which depicts a virtual room where all participants are synthetically positioned. Furthermore, the video conference system may instead comprise a virtual event system in which the video conferees are avatars that move in a virtual area controlled by the respective participants, as in a video game with top or isometric view where the position of participants is therefore the position of their respective avatars.

## Claims

1. A method for sensing and communicating visual focus of attention in a video conference between at least a first and a second video conferee (P1, P2, P3) located in respectively a first and a second location, wherein the method is using a video conference system comprising a user interface (U) displaying the video conferees (P1, P2, P3) on a screen (13) in each of said first and second locations, and wherein the method comprises:
retrieving the point of regard (g) of the first video conferee (P1) located in the first location, in relation to the user interface (U) displayed on the screen (13) to said first video conferee (P1) in said first location, by means of an eye tracking device (16),
determining the likelihood that the first video conferee (P1) is looking at each of one or more video conferees (P2, P3) as a function of said point of regard (g) and the spatial regions of said one or more video conferees (P2, P3) as rendered in said user interface (U) in said first location, and
wherein, communicating the visual focus of attention of the first video conferee (P1) in said first location, comprises:
generating and displaying a visual cue (40a, 40b, 40b', 40c, 40d, 40e, 40f, 40g) in said user interface (U) displayed on the screen (13) to the second video conferee (P2) in said second location, indicating the likelihood that the first video conferee (P1) in said first location is looking at the second video conferee (P2) in said second location, and/or generating and displaying a visual cue/additional visual cue either
on said user interface (U) displayed on said screen (13) in said second location to a third video conferee (P3) in the same second location indicating the likelihood that the first video conferee (P1) in said first location is looking at the third video conferee (P3) in said second location, or
on another user interface (U) displayed in another screen (13) in a third location to a third video conferee (P3) indicating the likelihood that the first video conferee (P1) in said first location is looking at the third video conferee (P3) in said third location .

2. The method according to claim 1, wherein communicating in said second location the likelihood that the first video conferee (P1) in said first location is looking at the second video conferee (P2) of said second location, comprises the steps of:
displaying a visual cue (40a, 40b, 40b', 40c, 40d, 40e, 40f, 40g) in said user interface (U) in said second location, in proximity to where the first video conferee (P1) in said first location is displayed, and
modifying the visual characteristics of said visual cue (40a, 40b, 40b', 40c, 40d, 40e, 40f, 40g) as a function of the likelihood that the first video conferee (P1) in said first location is looking at the second video conferee (P2) of said second location.

3. The method according to claim 2, wherein the step of modifying the visual characteristics of said visual cue, includes modifying one or multiple visual properties as a function of said likelihood, among the following properties: transparency; colour; shape; location; animation; icon replacement.

4. The method according to either of claims 1 to 3, wherein communicating in said second location the likelihood that the first video conferee (P1) in said first location is looking at the third video conferee (P3) in said third location, comprises the steps of:
displaying a visual cue in said user interface (U) in said second location, in proximity to where the first video conferee (P1) in said first location is displayed,
computing the relative spatial position of the third video conferee (P3) in said third location as displayed in the user interface in said second location, in relation to the position of the first video conferee (P1) in said first location as displayed in said user interface in said second location, and
modifying the visual properties of said visual cue as a function of both the likelihood that the first video conferee (P1) in said first location is looking at the third video conferee (P3) in said third location, and the relative spatial position of said third video conferee (P3) in said third location in relation to the first video conferee (P1) in said first location as displayed in said user interface in said second location.

5. The method according to claim 4, wherein the step of modifying the visual characteristics of said visual cue, includes modifying one or multiple visual properties as a function of said likelihood and said relative spatial position, among the following properties: orientation; shape; transparency; colour; location; animation variation; icon variation.

6. The method according to any of the preceding claims, wherein temporal filtering is applied when computing the variations of one or multiple visual properties of said visual cues.

7. The method according claim 2 or 3, wherein the step of modifying the visual characteristics of said visual cue, further comprises the steps of:
retrieving the point of regard (g2) of the second video conferee (P2) located in said second location, in relation to the user interface (U) displayed to said second video conferee (P2) in said second location, by means of an eye tracking device (16), and
computing the variations of one or multiple visual properties of said visual cues as also a function of the distance of said point of regard (g2) to each of the respective visual cues.

8. The method according to claim 7, wherein the step of modifying the visual characteristics of the visual cue corresponding to the visual focus of attention of video conferee (P1) in a first location, as displayed on the user interface in a second location, as a function of the point of regard (g2) of video conferee (P2) in said second location, has a different effect according to the likelihood that said video conferee (P1) in a first location is looking at video conferee (P2) in said second location, in comparison to the likelihood that video conferee (P1) in a first location is looking at the third video conferee (P3) in a third location.

9. The method according to any of the preceding claims, wherein the location and number of visual cues displayed in said user interface in said second location, onto a layout region associated to one or many conferees (P1, P3) in a first location, is a function of the number of conferees (P1, P3) in said first location.

10. The method according to any of the preceding claims, wherein computing the location of said visual cue further comprises the steps of:
using a system to recognize the image position of the first video conferee (P1) in said first location, on the video transmitted from said first location to said second location, and
computing the location of a visual cue associated to the first video conferee (P1) as a function of the image position of said first video conferee (P1) in said video.

11. The method according to claim 2 or 3, wherein the step of modifying the visual characteristics of said visual cue, further comprises the steps of:
retrieving the point of regard (g2) of the second video conferee (P2) located in said second location, in relation to the user interface displayed to said second video conferee (P2) in said second location, by means of an eye tracking device (16), and
computing the variations of one or multiple visual properties of said visual cue as also a function of the likelihood that the second video conferee (P2) in said second location is looking at the first video conferee (P1) of said first location, as rendered in said user interface in said second location.

12. The method according to claim 2 or 3, wherein the step of modifying the visual characteristics of said visual cues, further comprises the steps of:
retrieving the point of regard (g3) of the third video conferee (P3) located in said third location, in relation to the user interface displayed to said third video conferee (P3) in said third location, by means of an eye tracking device (16), and
computing the variations of one or multiple visual properties of said visual cues as also a function of the likelihood that the third video conferee (P3) in said third location is looking at the first video conferee (P1) in said first location, as rendered in said user interface in said second location.

13. The method according to claims 2 or 3, wherein the step of modifying the visual characteristics of said visual cue associated to the first video conferee (P1) when looking at the third video conferee (P3), is also dependent on the likelihood that said third video conferee (P3) is looking at the first video conferee (P1).

14. The method according to claim 2 or 3, wherein the step of modifying the visual characteristics of said visual cue includes modifying the appearance of the first video conferee (P1) in said user interface in said second location, said appearance being modified based on at least one or a combination of at least two of the following appearance modifications: eyes direction; head pose; body pose.

15. A tangible computer product containing program code for causing a processor to execute the method of one of the claims 1 to 14 when said code is executed on said processor.
